# EUROPEAN PATENT APPLICATION

(11) **EP 4 717 457 A1**
(43) Date of publication of application: **01.04.2026**
(21) Application number: 25192889.1
(22) Date of filing: 30.07.2025
(51) Int. Cl.: B33Y 80/00, F28D 1/053, F28D 7/16, F28F 9/00, F28F 9/013

(54) **ADDITIVELY MANUFACTURED HEAT EXCHANGER SUPPORTS AND METHOD OF MANUFACTURE**

(30) Priority: 30.09.2024 US 202418902382
(71) Applicant: RTX Corporation, Farmington, CT 06032 (US)
(72) Inventor: SOBANSKI, Jon, East Hartford 06118 (US); SNYDER, Jacob, East Hartford 06118 (US); CALDWELL, Dustin, East Hartford 06118 (US)
(74) Representative: Dehns

(57) **Abstract**

A heat exchanger (10; 110; 210) includes a hollow fairing (14; 114; 214), a heat exchanger core (12; 112; 212) disposed in the hollow fairing (14; 114; 214) and comprising a plurality of fluid conduits (15; 115; 215), at least one external manifold (16, 18; 116, 118; 216, 218) disposed external to the hollow fairing (14; 114; 214) and fluidly coupled to the plurality of fluid conduits (15; 115; 215), and at least one compliant support structure (42, 44; 142, 144; 242; 244) connected to the at least one external manifold (16...218). The at least one compliant support structure (42...244) includes a first support leg (22A-1, 22B-1, 24A-1, 24B-1; 122A-1, 124A-1; 222A, 224A), a second support leg (22A-2, 22B-2, 24A-2, 24B-2; 122A-2, 124A-2; 222B, 224B), and a compliant member (46, 50, 52; 146, 150; 246, 248). The first support leg (22A-1...224A) extends from the at least one external manifold (16...218). The second support leg (22A-2...224B) extends from the hollow fairing (14; 114; 214) or an external structure (20; 220) of the heat exchanger (10; 110; 210) toward the first support leg (22A-1...224A) and is separated from the first support leg (22A-1...224A) by a first gap. The compliant member (46...248) is connected to one or both of the first support leg (22A-1...224A) and the second support leg (22A-2...224B).

## Description

### TECHNICAL FIELD

The present disclosure generally relates to additive manufacturing and more particularly relates to additively manufactured heat exchangers with external build support structures.

### BACKGROUND

Heat exchangers can operate in environments subject to wide temperature fluctuations, including but not limited to aerospace applications. Heat exchangers subject to environmental thermal fluctuations, including high temperature operating environments, can have reduced service lives due to high thermal stress caused by uneven temperature distribution within the heat exchanger or with abutting components, component stiffness, and/or other material properties.

Additively manufactured heat exchangers often require external manifolding (i.e., inlet and outlet manifolds) to interface with a working fluid. The external manifolding exists outside of a primary heat exchanging element or core and, therefore, can be subject to increased thermal strain or stress. Furthermore, the additive manufacturing process often requires support material to be included in the heat exchanger build design to aid in manifold construction. Depending on the geometry of the heat exchanger, external build support structures may be required to reinforce the build and/or facilitate the manufacturing process. Build support structures that remain in place to reinforce the external manifolding during operation can further drive thermal stress and over-constraint in the external manifolding, which can have detrimental low cycle fatigue impact.

### SUMMARY

A heat exchanger includes a hollow fairing, a heat exchanger core disposed in the hollow fairing and comprising a plurality of fluid conduits, at least one external manifold disposed external to the hollow fairing and fluidly coupled to the plurality of fluid conduits, and at least one compliant support structure connected to the at least one external manifold. The at least one compliant support structure includes a first support leg, a second support leg, and a compliant member. The first support leg extends from the at least one external manifold. The second support leg extends from the hollow fairing or an external structure of the heat exchanger toward the first support leg and is separated from the first support leg by a first gap. The compliant member is connected to one or both of the first support leg and the second support leg.

A method of constructing a heat exchanger using an additive manufacturing process includes constructing the heat exchanger by additively building a heat exchanger core comprising a plurality of fluid conduits, additively building a hollow fairing around the heat exchanger core, additively building a support structure external to the hollow fairing, and additively building a manifold external to the hollow fairing and connected to the support structure. The method further includes removing a segment of the support structure following construction of the heat exchanger. The segment of the support structure is located between but not connected to the manifold and the hollow fairing or the manifold and an external surface of the heat exchanger to which the support structure is connected.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

FIG. 1 is a schematic illustration of a heat exchanger formed using additive manufacturing.
FIG. 2 is a schematic illustration of the heat exchanger of FIG. 1 with segments of build supports provided for external manifolding removed.
FIGS. 3A and 3B are enlarged schematic illustrations of external manifolding of the heat exchanger of FIG. 2 with reinforcing members applied across the removed segments.
FIG. 4 is a schematic illustration of another embodiment of a heat exchanger formed using additive manufacturing and with reinforcing members provided to build supports that have had segments removed therefrom.
FIG. 5 is a schematic illustration of another embodiment of a heat exchanger formed using additive manufacturing and having an integrally formed compliant member.
FIG. 6 is a flowchart of a method for forming a heat exchanger having compliant support structures.

While the above-identified figure sets forth an embodiment of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features, steps and/or components not specifically shown in the drawings.

### DETAILED DESCRIPTION

Build supports can be provided to accommodate the construction of external manifolding of a heat exchanger formed in an additively manufactured process. As disclosed herein, build supports can connect a fairing or housing of a heat exchanger core with the external manifolding. In one aspect of the present disclosure, one or more segments of a build support are removed and the remaining portions of the build support are reinforced with a compliant material or material having thermal growth properties selected to allow for movement of the external manifolding with respect to the fairing or housing with thermal expansion and contraction. In another aspect of the present disclosure, a compliant structure is integrally formed as part of a build support for the external manifolding of the heat exchanger and segments of the build support are cut or removed to allow for movement of the external manifolding with respect to the fairing or housing with thermal expansion and contraction. The disclosed method of manufacture takes advantage of as-built support structures to improve low cycle fatigue capability as it relates to thermal mechanical fatigue while meeting high cycle fatigue requirements and, optionally, improving damping characteristics.

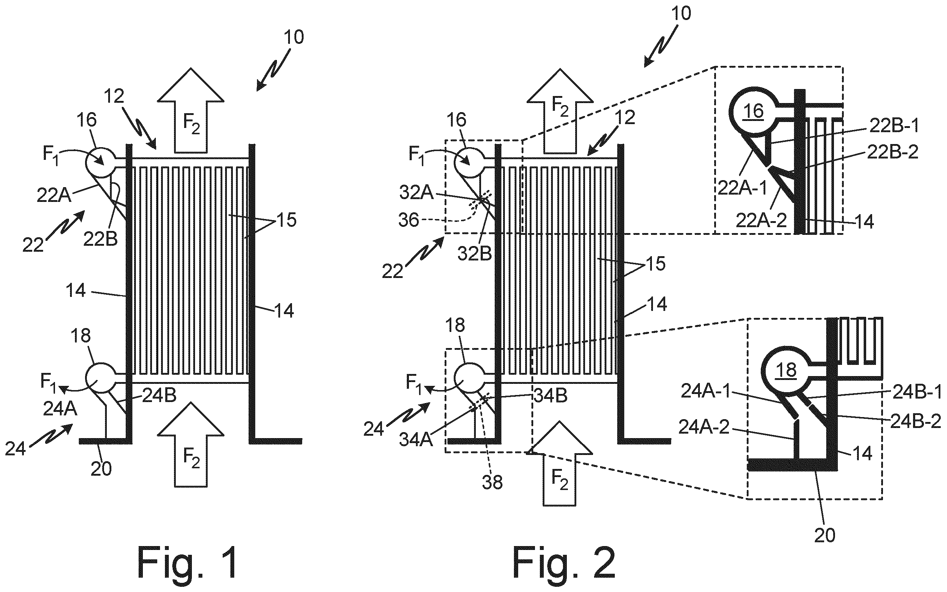

FIG. 1 is a schematic illustration of heat exchanger 10 formed using an additive manufacturing process. FIG. 1 shows heat exchanger core 12, fairing 14, inlet manifold 16, outlet manifold 18, base 20, inlet manifold build support 22 with support structures 22A, 22B, outlet manifold build support 24 with support structures 24A, 24B, first fluid F₁ with flow direction represented by arrows, and second fluid F₂ with flow direction represented by arrows. Heat exchanger 10 can be a counterflow heat exchanger as illustrated, however, the present disclosure is not limited to counterflow heat exchanger configurations.

Heat exchanger 10 is configured to permit the transfer of heat between first fluid F₁ and second fluid F₂. For example, a transfer of heat can be associated with the use of first fluid F₁ and/or second fluid F₂ for cooling and/or lubrication of components in a larger system, such as a gas turbine engine or aerospace system. First fluid F₁ and second fluid F₂ can be any type of fluid including, for example, air (e.g., engine exhaust), water, lubricant, fuel, or supercritical fluid. Heat exchanger 10 can be configured to provide heat transfer from second fluid F₂ to first fluid F₁. As such, second fluid F₂ can be at a greater temperature than first fluid F₁ at the location where second fluid F₂ enters heat exchanger 10. Heat exchanger 10 can be, for example, a two-phase heat exchanger with first fluid F₁ undergoing a phase change with addition of heat from second fluid F₂. In a non-limiting embodiment, second fluid F₂ can be, for example, engine exhaust gas and first fluid F₁ can be water, which is converted to steam, or a supercritical fluid (e.g., supercritical CO2). In alternative configurations, first fluid F₁ can provide heat transfer to second fluid F₂.

Heat exchanger core 12 is the primary heat exchanging element for first fluid F₁. Core 12 can be disposed in a hollow fairing 14. Core 12 can include a plurality of fluid conduits 15 extending in fluid communication between inlet manifold 16 and outlet manifold 18. Fluid conduits 15 can be arranged in any configuration between inlet manifold 16 and outlet manifold 18 and can have any geometry suitable to provide a desired heat transfer. Fairing 14 can extend perpendicular to fluid conduits 15. Inlet manifold 16 and outlet manifold 18 are disposed external to fairing 14. Inlet manifold 16 and outlet manifold 18 can extend perpendicularly from fairing 14. Inlet manifold 16 can be supported by inlet manifold build support 22 with support structures 22A and 22B. Outlet manifold 18 can be supported by outlet manifold build support 24 with support structures 24A and 24B. Inlet manifold build support 22 can connect inlet manifold 16 to fairing 14 and outlet manifold build support 24 can connect outlet manifold 18 to fairing 14 and base 20.

Base 20 can be a portion of fairing 14 or other external structure configured to support outlet manifold 18 in the additive manufacturing build process and operation of heat exchanger 10. Base 20 can extend outward from and perpendicular to fairing. Base 20 can extend parallel to and below (in a build direction) from outlet manifold 18. In some examples, base 20 can be configured to secure a position of heat exchanger (e.g., fasten heat exchanger 10 to another component). It will be understood by one of ordinary skill in the art that the location and orientation of base 20 and inlet and outlet build supports 22 and 24 can be based, at least in part, on a build direction of heat exchanger 10. In the present example, the build direction can be, for example, from base 20 to inlet manifold 16 with the orientation of build supports 22 and 24 at an angle of 45 degrees or less relative to the build direction.

Inlet manifold build support 22 and outlet manifold build support 24 can include any number of support structures (e.g., 22A, 22B, 24A, 24B) provided in any arrangement and geometry suitable for accommodating the build process of inlet manifold 16 and outlet manifold 18 and providing structural support to inlet manifold 16 and outlet manifold 18 during operation of heat exchanger 10. Inlet manifold build support 22 can include, for example, support structures 22A and 22B. Support structures 22A and 22B can connect inlet manifold 16 to fairing 14, extending from a first end connected to inlet manifold 16 to a second end connected to fairing 14. As shown in FIG. 1, support structure 22A can extend in a linear orientation from inlet manifold 16 to fairing 14 and support structure 22B can extend in a bent orientation from inlet manifold 16 to fairing 14. Support structures 22A and 22B can intersect or connect as shown in FIG. 1 or can be fully separated from one another.

Outlet manifold build support 24 can include, for example, support structures 24A and 24B. As shown in FIG. 1, support structures 24A and 24B can be fully separated from one another. Support structure 24A can connect outlet manifold 18 to base 20, extending in a bent configuration from a first end connected to outlet manifold 18 to a second end connected to base 20. Support structure 24B can connect outlet manifold 18 to fairing 14, extending in a linear orientation from a first end connected to outlet manifold 18 to a second end connected to fairing 14.

Inlet manifold 16 is configured to receive first fluid F₁ and deliver first fluid F₁ to core 12. Outlet manifold 18 is configured to receive first fluid F₁ from core 12 as first fluid F₁ exits core 12. In the counterflow heat exchanger arrangement shown in FIG. 1, first fluid F₁ can be a "cool" fluid at inlet manifold 16 and a "hot" fluid at outlet manifold 18, which has been heated by second fluid F₂ flowing in an opposite direction (from a region adjacent to outlet manifold 18 toward inlet manifold 16). As second fluid F₂ transfers heat to first fluid F₁, second fluid F₂ cools such that second fluid F₂ exiting heat exchanger 10 adjacent to inlet manifold 16 is cooler than second fluid F₂ entering heat exchanger 10. A thermal gradient exists between each of inlet manifold 16 and outlet manifold 18 and fairing 14 as inlet manifold 16 and outlet manifold 18 are located external to fairing 14 and core 12.

Heat exchanger 10 can be formed partially or entirely by an additive manufacturing process. For metal components, (e.g., nickel-based superalloys, aluminum, titanium, etc.), exemplary additive manufacturing processes include laser-powder bed fusion and electron beam powder bed fusion techniques in which the components are formed layer by layer. Build support structures, such as those of inlet and outlet manifold build supports 22 and 24, can be provided during the additive manufacturing process to support overhang regions (e.g., inlet manifold 16 and outlet manifold 18) in the build process. Once heat exchanger 10 has been manufactured, portions of build supports can remain as part of the structure of heat exchanger 10 during operation. As manufactured, inlet manifold build support 22 and outlet manifold build support 24 can provide necessary structural support for inlet manifold 16 and outlet manifold 18, respectively, however, this structural support is provided at the expense of low cycle fatigue lives. The mismatch in temperature between inlet manifold 16, outlet manifold 18, fairing 14, and inlet manifold and outlet manifold build supports 22, 24 causes a mismatch in thermal growth, which creates thermal strain and drives high thermal stress. The stiffness of inlet manifold build support 22 and outlet manifold build support 24 causes thermal over-constraint.

FIG. 2 is a schematic illustration of heat exchanger 10 with segments of build supports 22 and 24 removed. Build supports can be constructed with break-away segments that can easily be removed post build. For example, any or all of supports structures 22A, 22B, 24A, 24B can include one or more regions of reduced thickness that can be broken apart from regions of increased thickness by hand or with suitable tooling. Alternatively, or additionally, segments from any or all of support structures 22A, 22B, 24A, 24B can be removed by cutting (e.g., wire electrical discharge machining or rotary tool). FIG. 2 illustrates the location and removal of segments 32A and 32B from support structures 22A and 22B, respectively, and the location and removal of segments 34A and 34B from support structures 24A and 24B, respectively. Enlarged views of build supports 22 and 24 show gaps in the locations where segments 32A, 32B, 34A, and 34B have been removed with remaining portions of support structures 22A, 22B, 24A, 24B defined by a plurality of support legs having free ends. For example, each of support structure 22A and 22B can be cut to form support leg 22A-1 22B-1, respectively, extending from inlet manifold 16 and support legs 22A-2 and 22B-2, respectively, extending from fairing 14. As illustrated, support legs 22A-1 and 22B-1 can be joined at free ends (away from inlet manifold 16) and support legs 22A-2 and 22B2 can be joined at free ends (away from fairing 14). Similarly, each or support structures 24A and 24B can be cut to form support legs 24A-1 and 24B-1, respectively, extending from outlet manifold 18 and support legs 24A-2 and 24B-2, respectively, extending from fairing 14 or base 20. As illustrated, free ends of support legs 24A-1 and 24B-1 can be separated from one another and free ends of support legs 24A-2 and 24B-2 can be separated from one another.

As illustrated, segments 32A and 32B can be aligned on cut line 36 and segments 34A and 34B can be aligned on cut line 38 such that a single cutting orientation can be maintained in removing segments 32A, 32B and 34A, 34B from the corresponding pairs of support structures 22A, 22B and 24A, 24B. In other embodiments, segments 32A, 32B, 34A, 34B can be removed from any location between inlet manifold 16 or outlet manifold 18 and fairing 14 or base 20. Importantly, segments can be removed from all support structures connecting inlet manifold 16 to fairing 14 and connecting outlet manifold 18 to fairing 14 or base 20 to allow inlet manifold 16 and outlet manifold 18 to move with respect to fairing 14 and/or base 20. The location of segments 32A, 32B, 34A, 34B can be selected based on the configuration of compliant members subsequently added to build supports 22, 24 as discussed further herein. A length of segments 32A, 32B, 34A, 34B can be selected to maintain a gap between adjacent support legs 32A-1 and 32A-2, 32B-1 and 32B-2, 34A-1 and 34A-2, and 34B-1 and 34B-2 during operation of heat exchanger 10. For example, a gap between any pair of support legs (e.g., 32A-1 and 32A-2) has a length extending from a free end of each support leg greater than a combined linear thermal growth length or linear thermal displacement of the pair of support legs.

Cutting or removing segments of build supports 22 and 24 can prevent inlet manifold 16 and outlet manifold 18 from being over-constrained relative to fairing due to temperature mismatch during operation of heat exchanger 10. However, this additional thermal compliance comes at the expense of manifold strength and stiffness. Cutting or removing segments of build supports 22 and 24 relieves the tie between each of inlet manifold 16 and outlet manifold 18 and fairing 14 (and/or base 20), allowing the inlet manifold 16 and outlet manifold 18, which are freely hanging relative to fairing 14 (and/or base 20), to vibrate with operation of heat exchanger 10. This reduces the high cycle fatigue lives. In other words, low cycle fatigue is improved by cutting build supports 22 and 24 but at the expense of high cycle fatigue. In order to appropriately balance the low cycle fatigue and high cycle fatigue, compliant reinforcing members are provided to build supports 22 and 24 in the locations of the removed segments 32A, 32B, 34A, 34B to provide structural support to inlet manifold 16 and outlet manifold 18 while accommodating thermal growth mismatch between inlet manifold 16, outlet manifold 18, fairing 14, and base 20.

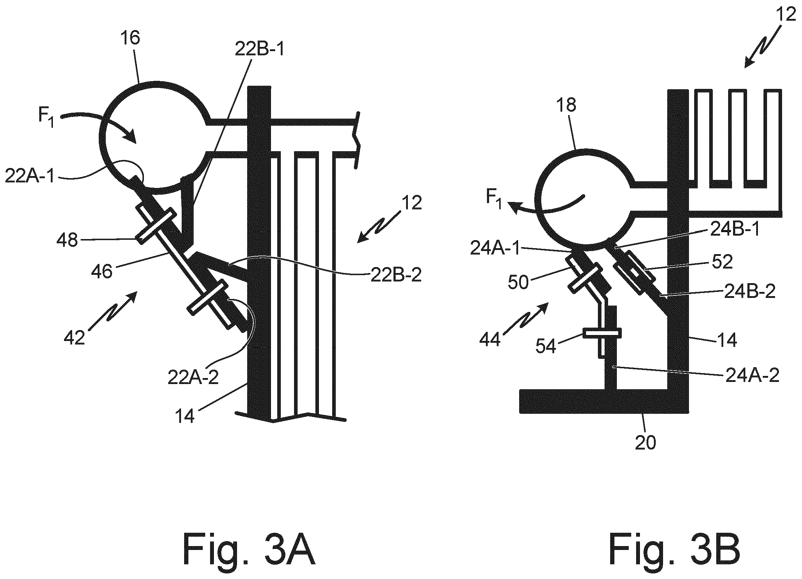

FIGS. 3A and 3B are enlarged schematic illustrations of inlet manifold 16 and outlet manifold 18 of heat exchanger 10 with compliant support structures 42 and 44, respectively. FIG. 3A shows core 12, fairing 14, inlet manifold 16, compliant support structure 42, support legs 22A-1 and 22A-2, support legs 22B-1 and 22B-2, compliant member 46, optional fasteners 48, and first fluid F₁. FIG. 3B shows core 12, fairing 14, outlet manifold 18, compliant support structure 44, support legs 24A-1 and 24A-2, support legs 24B-1 and 24B-2, compliant members 50 and 52, optional fasteners 54, and first fluid F₁. FIGS. 3A and 3B are discussed together herein.

Compliant reinforcing structures 42 and 44 are formed by providing compliant members 46, 50, and 52 across the removed segments of build supports 22 and 24. Compliant member 46 provides structural support to inlet manifold 16 while accommodating thermal mismatch including relative thermal growth and contraction of the components. Compliant members 50 and 52 provide structural support to outlet manifold 18 while accommodating thermal mismatch including relative thermal growth and contraction of the components.

Compliant member 46 can bridge or extend across the gap formed by the removal of segments 32A and 32B and connect joined support legs 32A-1, 32B-1 to joined support legs 32A-2 and 32B-2. Compliant member 50 can bridge or extend across the gap formed by the removal of segment 34A and can connect support leg 34A-1 to support leg 34A-2. Compliant member 52 can bridge or extend across the gap formed by the removal of segment 34B and can connect support leg 34B-1 to support leg 34B-2. Compliant members 46, 50, and 52 can be secured to support legs by any suitable means, including but not limited to mechanical fasteners 48 and 54 such as screws, bolts, rivets, clamps, and the like. In some embodiments, compliant members 46, 50, 52 can be welded to support legs, can be attached via a press fit, or can form a sleeve configured to receive support legs, as illustrated by compliant member 52. Mechanisms for securing compliant members 46, 50, and 52 can be based at least in part on the material and shape of compliant members 46, 50, and 52. Other mechanisms for securing compliant members 46, 50, and 52 are contemplated.

In one example, compliant members 46, 50, and 52 can be formed of a compliant material, including high temperature polymers or polymers suitable for heat exchanger applications (e.g., neoprene, rubber, Delrin^{®}) and selected to provide flexible support to inlet manifold 16 and outlet manifold 18. Compliant material used to form compliant members 46, 50, and 52 can also be selected based on inherent natural damping properties, which can accommodate vibratory response during operation of heat exchanger 10.

In another example, compliant members 46, 50, and 52 can be formed from a material that is tuned to provide thermal growth properties suitable for accommodating the temperature mismatch between each of inlet manifold 16 and outlet manifold 18 and fairing 14 or base 20. For example, heat exchanger 10 can be formed from a nickel-based alloy and compliant member 46, 50, 52 can be formed of aluminum, which has a higher thermal expansion coefficient than the nickel-based alloy. The location and size of compliant member 46, 50, and 52 can be selected to manage thermal growth to allow the components to grow while maintaining stiffness to support inlet manifold 16 and outlet manifold 18 during operation of heat exchanger 10. Material selection can be based on thermal growth properties of heat exchanger 10 and operational conditions of heat exchanger 10.

Compliant member 46 can connect one or a plurality of support legs extending from inlet manifold 16 to one or a plurality of support legs extending from fairing 14. Furthermore, compliant support structure 42 can include more than one compliant member depending on the number and arrangement of support structures. Each of compliant member 50 and compliant member 52 can connect one or a plurality of support legs extending from outlet manifold 18 to one or a plurality of support legs extending from fairing 14 or base 20. Furthermore, compliant support structure 42 can include any number of compliant members based on the number and arrangement of support structures. It will be understood by one of ordinary skill in the art that support structures (e.g., 22A, 22B, 24A, 24B) can be provided in any number and arrangement suitable for supporting the additive manufacturing build of inlet manifold 16 and outlet manifold 18 and for flexibly supporting, in combination with compliant members (e.g., 46, 50, and 52), inlet manifold 16 and outlet manifold 18 during operation of heat exchanger 10.

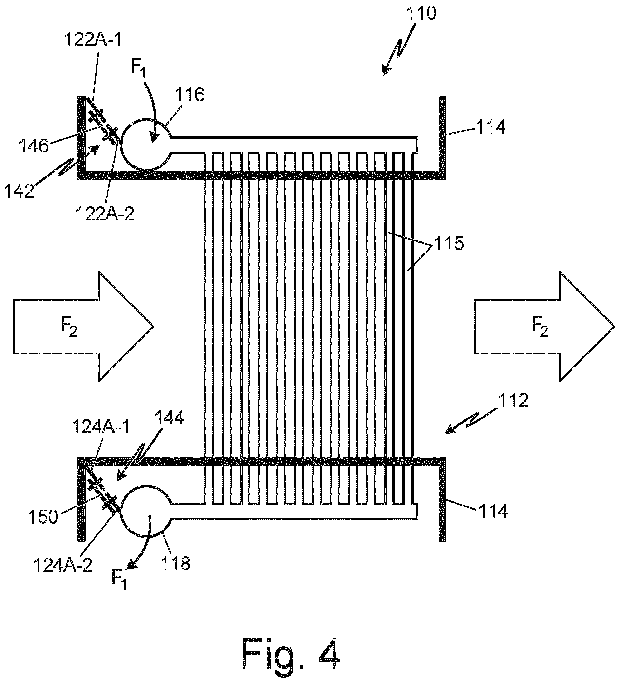

FIG. 4 is a schematic illustration of a cross-flow heat exchanger formed using additive manufacturing and with reinforcing members provided to build supports that have had segments removed therefrom. FIG. 4 shows heat exchanger 110, core 112, fairing 114, fluid conduits 115 inlet manifold 116, outlet manifold 118, compliant support structures 142, 144, support legs 122A-1, 122A-2 and 124A-1 and 124A-2, compliant members 146 and 150, first fluid F₁, and second fluid F₂. Heat exchanger 110 is substantially similar to heat exchanger 10 with the exception that heat exchanger 110 has a cross-flow heat exchange arrangement. As illustrated in FIG. 4, fairing 114 separates core 112 from inlet manifold 116 and outlet manifold 118, which are disposed external to fairing 114 and core 112. As described with respect to heat exchanger 10, each of inlet manifold 116 and outlet manifold 118 can be flexibly supported by compliant support structures 142 and 144, respectively. Compliant support structures 142 and 144 can be substantially similar to compliant support structures 42 and 44 of heat exchanger 10, having compliant members 42 and 50 bridging a gap formed by removing segments from build support structures. As shown, compliant member 142 can bridge or extend across a gap connecting support leg 122A-1, extending from inlet manifold 116, to support leg 122A-2, extending from fairing 114. Compliant member 150 can bridge or extend across a gap connecting support leg 124A-1, extending from outlet manifold 118, to support leg 124A-2, extending from fairing 114. As previously described, compliant support structures 142 and 144 can include any number and arrangement of compliant members and support legs as needed for constructing inlet manifold 116 and outlet manifold 118 using additive manufacturing processes and flexibly supporting inlet manifold 116 and outlet manifold 118 during operation of heat exchanger 110. The arrangement and orientation of build supports, as provided during the additive manufacturing build process to facilitate building of inlet manifold 116 and outlet manifold 118, can be selected based, at least in part, on the build direction. In the embodiment shown in FIG. 4, the build direction may be, for example, at roughly 45 degrees to fairing 114 and fluid conduits 115 of core 112.

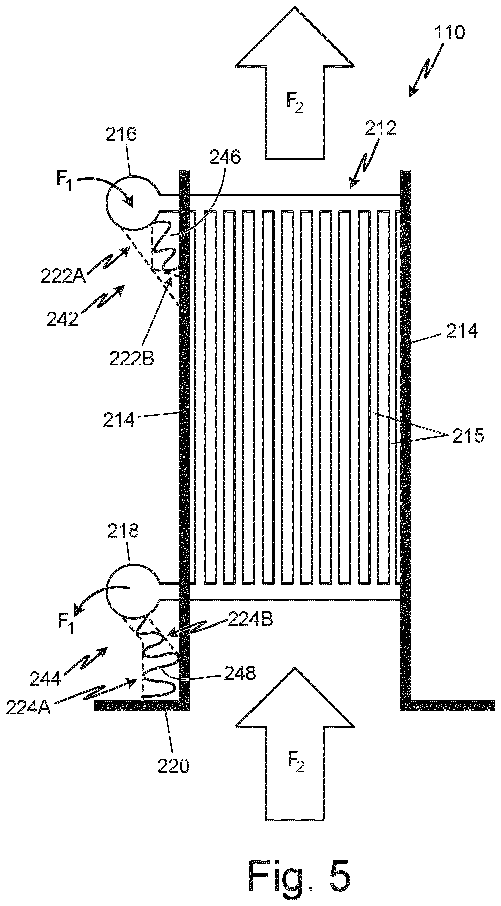

FIG. 5 is a schematic illustration of another embodiment of a heat exchanger formed using additive manufacturing and having an integrally formed compliant member. FIG. 5 shows heat exchanger 210, core 212, fairing 214, fluid conduits 215, inlet manifold 216, outlet manifold 218, base 220, compliant support structures 242 and 244, first fluid F₁, and second fluid F₂. Heat exchanger 210 can be a counterflow heat exchanger substantially similar to heat exchanger 10 with modified compliant support structures 242 and 244.

Compliant support structures 242 and 244 are integrally formed with heat exchanger 210 in the additive manufacturing build process. Compliant support structures 242 and 244 can include one or more support structures 222A, 222B, 224A, and 224B configured to support the construction of inlet manifold 216 and outlet manifold 218 in the additive manufacturing build process. Compliant support structures 242 and 244 can additionally include a compliant member 246, 248, respectively, disposed adjacent to and connected to one or more support structures (e.g., 222A and 222B or 224A and 224B). Compliant members 246 and 248 can have any shape configured to support inlet manifold 216 and outlet manifold 218 while accommodating movement of inlet manifold 216 and outlet manifold 218 relative to fairing 214 and/or base 220 during operation of heat exchanger 210. For example, compliant members 246 and 248 can have a spring-like configuration with multiple turns of the spring-like members connected to one or more support structures (e.g., 222A and 222B or 224A and 224B). Cuts can be made in or segments can be removed from support structures 222A and 222B or 224A and 224B to accommodate flexing of compliant members 246 and 248. For example, as illustrated by the discontinuous support structures 222A, 222B, 224A, and 224B in FIG. 5, a plurality of segments can be removed from each of the support structures to accommodate flexing of compliant members 246 and 248 caused by thermal mismatch between inlet manifold 216 and fairing 214 and outlet manifold 218 and fairing 214 or base 220.

Compliant members 246 and 248 can be disposed adjacent to and connected to a single support structure or multiple support structures. As illustrated in FIG. 5, compliant member 246 is disposed adjacent to and connected to support structure 222B and is separated from support structure 222A, with segments in each of supports structures 222A and 222B having been removed to accommodate thermal mismatch. Compliant member 248 is shown as being disposed between and connected to each of support structures 224A and 224B with segments removed from each of support structures 224A and 244B to accommodate thermal mismatch. Compliant structure 246 can extend fully between inlet manifold 216 and fairing 214, connecting to each of inlet manifold 216 and fairing 214, or can extend a portion of the distance between inlet manifold 216 and fairing 214, connecting to one or neither of inlet manifold 216 and fairing 214. Similarly, compliant member 248 can extend fully between outlet manifold 218 and fairing 214 or base 220, connecting to each of outlet manifold 218 and fairing 214 or base 220, or can extend a portion of the distance between outlet manifold 218 and fairing 214 or base 220, connecting to one or neither of outlet manifold 218 and fairing 214 or base 220. Compliant members 246 and 248 connect inlet manifold 216 and outlet manifold 218 to fairing 214 or base 220 either directly or via segments of support structures 222A, 222B, 224A, 224B.

Compliant members 246 and 248 can be formed from the same material as support structures 222 and 224 and other components of heat exchanger 210. It will be understood by one of ordinary skill in the art that the shape and location of compliant members 246 and 248 can be selected based on build parameters and flexibility required to support inlet manifold 216 and outlet manifold 218 while accommodating thermal growth and contraction.

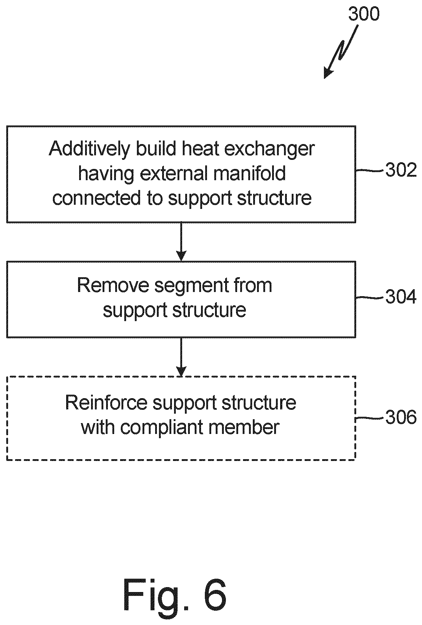

FIG. 6 is a flowchart of method 300 for forming a heat exchanger having compliant support structures according to the present disclosure. In step 302, a heat exchanger is built using an additive manufacturing process. The heat exchanger includes a core, fairing, and external inlet and outlet manifolds with build supports provided to facilitate the manufacture of the inlet and outlet manifolds and to support the inlet and outlet manifolds during operation of the heat exchanger. As described above, the build support structures connect the inlet and outlet manifolds the fairing or other external surface of the heat exchanger.

In step 304, segments from support structures connecting the inlet or outlet manifold to the fairing or other external surface are removed. In one example, segments from all support structures connecting the inlet or outlet manifold to the fairing or other external surface are removed such that the inlet and outlet manifolds are freely hanging relative to the fairing or other external surface to which the support structures are also connected. In another example, integrally formed compliant members can remain uncut, connecting the inlet and outlet manifolds to the fairing or other external surface directly or via the segmented support structures. Segments can be removed by cutting (e.g., wire EDM or rotary tool) or by breaking segments at break-away locations formed in the additive manufacturing process.

In step 306, support structures that do not include the integrally formed compliant member are reinforced with a compliant member. In one example, a compliant material, including but not limited to a high-temperature polymer capable of providing a desired flexibility and desirable damping properties can be applied to the support structures, bridging a gap formed by the removal of segments. The compliant material can connect the discontinuous segments providing structural support to the inlet and outlet manifolds while also providing flexibility to accommodate thermal mismatch during operation of the heat exchanger.

In another example, the compliant member can be formed from a material that is tuned to provide thermal growth properties suitable for accommodating the temperature mismatch between the inlet and outlet manifolds and fairing or other external surface to which the support structures are connected. The location and size of the compliant member can be selected to manage thermal growth to allow the components to grow while maintaining stiffness to support the inlet and outlet manifolds. Reinforcing compliant members can be provided to the disconnected support structures by any of a variety of means as previously described.

The disclosed method and support features can be applied to other heat exchanger configurations with external manifolding to provide thermally responsive support to the external manifolding. The disclosed method can take advantage of as-built support structures to improve low cycle fatigue capability as it relates to thermal mechanical fatigue while meeting high cycle fatigue requirements and additionally improving damping characteristics.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, standard error of measurements, incidental alignment variations, transient alignment or shape variations induced by thermal, rotational or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

### Discussion of Possible Embodiments

The following are non-exclusive descriptions of possible embodiments of the present invention.

A heat exchanger includes a hollow fairing, a heat exchanger core disposed in the hollow fairing and comprising a plurality of fluid conduits, at least one external manifold disposed external to the hollow fairing and fluidly coupled to the plurality of fluid conduits, and at least one compliant support structure connected to the at least one external manifold. The at least one compliant support structure includes a first support leg, a second support leg, and a compliant member. The first support leg extends from the at least one external manifold. The second support leg extends from the hollow fairing or an external structure of the heat exchanger toward the first support leg and is separated from the first support leg by a first gap. The compliant member is connected to one or both of the first support leg and the second support leg.

The heat exchanger of the preceding paragraph can optionally include, additionally and/or alternatively, any one or more of the following features, configurations, and/or additional components:
In an embodiment of the heat exchanger of the preceding paragraphs, the compliant member can bridge the first gap and connect the first support leg to the second support leg.

In an embodiment of the heat exchanger of any of the preceding paragraphs, the compliant member can be formed of a polymer.

In an embodiment of the heat exchanger of any of the preceding paragraphs, the compliant member can be a sleeve that receives an end of the first support leg and an end of the second support leg.

In an embodiment of the heat exchanger of any of the preceding paragraphs, the first gap can have a length extending from a free end of the first support leg to a free end of the second support leg greater than a combined linear thermal growth length of the first support leg and the second support leg.

In an embodiment of the heat exchanger of any of the preceding paragraphs, the first and second support legs can be formed of a first material having a first coefficient of thermal expansion and the compliant member can be formed of a second material having a second coefficient of thermal expansion, the second coefficient of thermal expansion greater than the first coefficient of thermal expansion.

In an embodiment of the heat exchanger of any of the preceding paragraphs, the compliant member can be a spring-like member integrally formed with the first and second support legs.

In an embodiment of the heat exchanger of any of the preceding paragraphs, the at least one external manifold can be an inlet manifold and the at least one external manifold can further include an outlet manifold and wherein the at least one compliant support structure is a first compliant structure and further comprises a second compliant support structure connected to the outlet manifold.

In an embodiment of the heat exchanger of any of the preceding paragraphs, the at least one compliant support structure can further include a third support leg extending from the at least one external manifold, a fourth support leg extending from the hollow fairing or an external structure of the heat exchanger toward the third support leg and separated from the third support leg by a second gap, and a compliant member connected to one or both of the third support leg and the fourth support leg.

A method of constructing a heat exchanger using an additive manufacturing process includes constructing the heat exchanger by additively building a heat exchanger core comprising a plurality of fluid conduits, additively building a hollow fairing around the heat exchanger core, additively building a support structure external to the hollow fairing, and additively building a manifold external to the hollow fairing and connected to the support structure. The method further includes removing a segment of the support structure following construction of the heat exchanger. The segment of the support structure is located between but not connected to the manifold and the hollow fairing or the manifold and an external surface of the heat exchanger to which the support structure is connected.

The method of the preceding paragraph can optionally include, additionally and/or alternatively, any one or more of the following features, configurations, additional components, and/or steps:
The method of the preceding paragraphs can further include attaching a compliant member to the support structure across the location of the removed segment.

In an embodiment of the method of any of the preceding paragraphs, the compliant member can be formed of a polymer.

In an embodiment of the method of any of the preceding paragraphs, removing the segment can form a gap in the support structure, the gap having a length extending from a free end of a first portion of the support structure to a free end of second portion of the support structure, the length being greater than a combined linear thermal growth length of the first portion and the second portion of the support structure.

In an embodiment of the method of any of the preceding paragraphs, the support structure can be formed of a first material having a first coefficient of thermal expansion and the compliant member can be formed of a second material having a second coefficient of thermal expansion, the second coefficient of thermal expansion greater than the first coefficient of thermal expansion.

The method of any of the preceding paragraphs can further include removing a plurality of segments of the support structure and attaching a plurality of compliant members to the support structure across the locations of the removed plurality of segments.

The method of any of the preceding paragraphs can further include constructing a compliant member, wherein the compliant member is integrally formed with and connected to the support structure.

In an embodiment of the method of any of the preceding paragraphs, the compliant member can be configured to flex with the removal of the support structure segments.

In an embodiment of the method of any of the preceding paragraphs, the manifold can be an inlet manifold and the support structure can be an inlet manifold support structure and the method can further include additively building an outlet manifold support structure, additively building an outlet manifold external to the hollow fairing and connected to the outlet manifold support structure, and removing a segment of the outlet manifold support structure following construction of the heat exchanger. The segment of the outlet manifold support structure can be located between but not connected to the outlet manifold and the hollow fairing or the outlet manifold and an external surface of the heat exchanger to which the outlet support structure is connected.

## Claims

1. A heat exchanger (10; 110; 210) comprising:
a hollow fairing (14; 114; 214);
a heat exchanger core (12; 112; 212) disposed in the hollow fairing (14; 114; 214) and comprising a plurality of fluid conduits (15; 115; 215);
at least one external manifold (16, 18; 116, 118; 216, 218) disposed external to the hollow fairing (14; 114; 214) and fluidly coupled to the plurality of fluid conduits (15; 115; 215); and
at least one compliant support structure (42, 44; 142, 144; 242; 244) connected to the at least one external manifold (16...218), the at least one compliant support structure (42...244) comprising:
a first support leg (22A-1, 22B-1, 24A-1, 24B-1; 122A-1, 124A-1; 222A, 224A) extending from the at least one external manifold (16...218);
a second support leg (22A-2, 22B-2, 24A-2, 24B-2; 122A-2, 124A-2; 222B, 224B) extending from the hollow fairing (14; 114; 214) or an external structure (20; 220) of the heat exchanger (10; 110; 210) toward the first support leg (22A-1...224A), the second support leg (22A-2...224B) separated from the first support leg (22A-1...224A) by a first gap; and
a compliant member (46, 50, 52; 146, 150; 246, 248) connected to one or both of the first support leg (22A-1...224A) and the second support leg (22A-2...224B).

2. The heat exchanger of claim 1, wherein the compliant member (46...248) bridges the first gap and connects the first support leg (22A-1...224A) to the second support leg (22A-2...224B).

3. The heat exchanger of claim 1 or 2, wherein the compliant member (46...248) is formed of a polymer.

4. The heat exchanger of claim 1, 2 or 3, wherein the compliant member (46...150) is a sleeve that receives an end of the first support leg (22A-1...124A-1) and an end of the second support leg (22A-2...124A-2).

5. The heat exchanger of any preceding claim, wherein the first gap has a length extending from a free end of the first support leg (22A-1...124A-1) to a free end of the second support leg greater (22A-2...124A-2) than a combined linear thermal growth length of the first support leg (22A-1...124A-1) and the second support leg (22A-2...124A-2).

6. The heat exchanger of any preceding claim, wherein the first and second support legs (22A-1... 124A-2) are formed of a first material having a first coefficient of thermal expansion and the compliant member (46...150) is formed of a second material having a second coefficient of thermal expansion, the second coefficient of thermal expansion greater than the first coefficient of thermal expansion.

7. The heat exchanger of claim 1 or 2, wherein the compliant member (246, 248) is a spring-like member integrally formed with the first and second support legs (222A, 224A, 222B, 224B).

8. The heat exchanger of any preceding claim, wherein the at least one external manifold (16...218) is an inlet manifold (16; 116; 216) and wherein the at least one external manifold (16...218) further includes an outlet manifold (18; 118; 218) and wherein the at least one compliant support structure (42...244) is a first compliant structure (42; 142; 242) and further comprises a second compliant support structure (44; 144; 144) connected to the outlet manifold (18; 118; 218).

9. The heat exchanger of any preceding claim, wherein the at least one compliant support structure (42...244) further comprises:
a third support leg (22A-1...224A) extending from the at least one external manifold (18...218);
a fourth support leg (22A-2...224B) extending from the hollow fairing (14; 114; 214) or an external structure (20; 220) of the heat exchanger (10; 110; 210) toward the third support leg (22A-1...224A), the fourth support leg (22A-2...224B) separated from the third support leg (22A-1...224A) by a second gap; and
a further compliant member (46...248) connected to one or both of the third support leg and the fourth support leg (22A-2... 224B).

10. A method comprising:
constructing a heat exchanger (10; 110; 210) using an additive manufacturing process, constructing the heat exchanger (10; 110; 210) comprising:
additively building a heat exchanger core (12; 112; 212) comprising a plurality of fluid conduits (15; 115; 215);
additively building a hollow fairing (14; 114; 214) around the heat exchanger core (12; 112; 212);
additively building a support structure (22A, 22B, 24A, 24B; 222A, 222B, 224A, 224B) external to the hollow fairing (14; 114; 214); and
additively building a manifold (16...218) external to the hollow fairing (14; 114; 214) and connected to the support structure (22A... 224B); and
removing a segment (32A, 32B, 34A, 34B) of the support structure (22A...224B) following construction of the heat exchanger (10; 110; 210), the segment (32A...34B) of the support structure (22A... 224B) located between but not connected to the manifold (16...218) and the hollow fairing (14; 114; 214) or the manifold (16...218) and an external surface of the heat exchanger (10; 110; 210) to which the support structure (22A... 224B) is connected.

11. The method of claim 10 and further comprising attaching a compliant member (46...248) to the support structure (22A... 224B) across the location of the removed segment (32A... 34B), optionally wherein the compliant member (46...248) is formed of a polymer.

12. The method of claim 10 or 11, wherein removing the segment (32A...34B) forms a gap in the support structure (22A...24B), the gap having a length extending from a free end of a first portion of the support structure (22A... 24B) to a free end of second portion of the support structure (22A...24B), the length being greater than a combined linear thermal growth length of the first portion and the second portion of the support structure (22A...24B), and/or wherein the support structure (22A... 24B) is formed of a first material having a first coefficient of thermal expansion and the compliant member (46...150) is formed of a second material having a second coefficient of thermal expansion, the second coefficient of thermal expansion greater than the first coefficient of thermal expansion.

13. The method of claim 10 or 11 and further comprising constructing a compliant member (246, 248), wherein the compliant member (246, 248) is integrally formed with and connected to the support structure (222A...224B), optionally wherein the compliant member (246, 248) is configured to flex with the removal of the support structure segments.

14. The method of any of claims 10 to 13 and further comprising removing a plurality of segments (32A... 34B) of the support structure (22A... 224B) and attaching a plurality of compliant members (46...248) to the support structure (22A... 224B) across locations of the removed plurality of segments (32A... 34B).

15. The method of any of claims 10 to 14 wherein the manifold (16...218) is an inlet manifold (16; 116; 216) and the support structure (22A...224B) is an inlet manifold support structure (22A, 22B; 222A, 222B) and further comprising:
additively building an outlet manifold support structure (24A, 24B; 224A, 224B);
additively building an outlet manifold (18; 118; 218) external to the hollow fairing (14; 114; 214) and connected to the outlet manifold support structure (24A...224B); and
removing a segment (34A, 34B) of the outlet manifold support structure (24A... 224B) following construction of the heat exchanger (10, 110, 210), the segment (34A, 34B) of the outlet manifold support structure (24A... 224B) located between but not connected to the outlet manifold (18; 118; 218) and the hollow fairing (14; 114; 214) or the outlet manifold (18; 118; 218) and an external surface of the heat exchanger (10; 110; 210) to which the outlet manifold support structure (24A...224B) is connected.
